# EUROPEAN PATENT SPECIFICATION

(11) **EP 2 664 261 B1**
(45) Date of publication and mention of the grant of the patent: **18.11.2015**
(21) Application number: 12844707.5
(22) Date of filing: 05.03.2012
(51) Int. Cl.: A47J 42/22

(54) **GRINDER**
MÜHLE
BROYEUR

(30) Priority: 01.11.2011 CN 201110339395
(43) Date of publication of application: 20.11.2013
(73) Proprietor: Ningbo Chefshere Kitchen Technology Co., Ltd, Ningbo, Zhejiang 315177 (CN)
(72) Inventor: DING, Lv, Ningbo Zhejiang 315000 (CN)
(74) Representative: Sun, Yiming
(86) International application number: PCT/CN2012/000270
(87) International publication number: WO 2013/063855

(56) References cited:
- CN-A- 101 721 147
- CN-Y- 2 840 885
- DE-C1- 3 509 234
- DE-U1- 20 000 353
- KR-A- 20070 087 409
- US-A1- 2011 256 273

## Description

### Technical field of the invention

The present invention relates to a grinder.

### Background of the invention

When cooking, people like to use spices which can give out certain flavors to change the flavors of foods. However, raw spices, which are generally large in volume, are leafy, or in large granular structure or other irregular shapes. Spices are usually ground into powder or small grains to be used instead of being added with their original structures. This is because powdery or small granular spices can give out richer flavors with less use amount compared with those with their original structures. At the same time, these powdery or small granular spices can be dissolved in foods uniformly after being added, thus preventing strong tastes caused by spices with original structures for those who eat these foods. Therefore, ground spices are preferred by people.

Generally, there are two spice grinding methods, industrial grinding and home grinding. Industrial grinding refers to grinding a spice into an ideal state with a machine, and then packaging and selling the spice. Since powdery and small granular spices are easy to lose their flavors, the ground spice has a certain shelf life which is much shorter than the shelf lives of spices with original structures. Home grinding refers to grinding spices with some relatively small convenient handheld small-size grinders. The amount of each grinding is basically the use amount required for each cooking. Flavors provided by freshly-ground spices are more natural, original and purer. As people are requiring higher and higher quality of life, home grinders become more and more popular.

Existing grinders generally comprises a container portion for containing a raw spice and a grinding head component interconnected with the container portion and used for grinding the spice. The grinding head component comprises an auxiliary grinding head with a through hole and a main grinding head provided in the through hole. Grinding teeth are provided on the opposite peripheral walls of the main grinding head and the auxiliary grinding head and there is a certain distance therebetween to form a grinding cavity of the spice. Since the grinding cavity is relatively narrow, generally, existing home grinders can be only used for grinding zanthoxylum and coarse salt grains etc. with relatively small original structure and spices that can be ground need to slide from the container portion into the grinding cavity with the help of their own weight while some spices such as chilli, bay leaf and Illicium verum etc. with relatively light weight and/or relatively large original volume cannot be ground.

Document US-A-2011/0256273 discloses a grinder according to the preamble of independent claim 1.

### Summary of the invention

The technical problem to be solved by the present invention is to provide a grinder capable of grinding not only a spice with small volume and high density, but also a spice with large volume and low density conveniently according to the present situation of the prior art.

An technical solution applied by the present invention to solve the technical problem above is the grinder according to independent claim 1.

The grinding component in each solution above may use various structures in the prior art. Preferably, the grinding component may comprise a fixed blade set in the casing, a moveable blade matched with the fixed blade to cut and grind the spice and driven by an external force to rotate. The structure is especially applicable to grinding a leafy spice with large volume or surface area.

As an improvement, the moveable blade may comprise a fixed base driven by an external force to rotate and a plurality of blades connected on the periphery of the fixed base. The blades are arranged uniformly along the periphery of the fixed base. The moveable blade structure also functions as a stirring paddle so that the spice is fed more smoothly.

Preferably, each blade is set aslant relative to the plane where the fixed base is located.

In the solution above, the rotation of the moveable blade and the screw rod may be driven by an electric mechanism, e.g. a transmission mechanism comprising a motor matched with a drive gear group, or may be a manual component controlled manually, set on the casing, and driving and connected with the moveable blade and the screw rod. The manual component may have various structures. Preferably, the upper portion of the casing may be provided with a hollow rotating base connected with the casing and capable of rotating relative to the casing. The hollow rotating base is provided with a rotating shaft interlocked with the hollow rotating base. The rotating shaft drives and is connected with the fixed base and the screw rod.

In order to discharge the ground spice conveniently and increase the mutual cutting force with the moveable blade, the fixed blade may comprise a flat plate located opposite to the casing and a plurality of interconnected material holes provided on the flat plate. The fixed blade in this structure divides the inner cavity of the casing into a feeding and grinding area at the lower portion and a discharging area at the upper portion, which is structured more simply and rationally.

Preferably, the material holes are provided with sharp teeth protruding inwards.

Compared with the prior art, the design of the feeding mechanism in the present invention provides a solution for feeding a spice with large volume and/or a relatively smooth spice with small friction in the prior art, so that the grinder provided by the present invention is applicable to not only grinding of a granular spice, but also grinding of a leafy spice with large volume and light weight. The design of the screw rod feeding mechanism in the preferred solution can provide a simpler and more rational structure for the grinder on the premise of ensuring smooth conveyance of the spice while the design of the grinding component comprising the moveable blade matched with the fixed blade ensures easier grinding of spices with large volume.

### Brief description of the drawings

Fig. 1 is a schematic diagram illustrating a stereo-structure of an embodiment of the utility model;
Fig. 2 is a three-dimensional exploded view of an embodiment of the utility model; and
Fig. 3 is a local sectional view of an embodiment of the utility model.

### Detailed description of the invention

The present invention will be described in details below in combination with the accompanying drawings and embodiments.

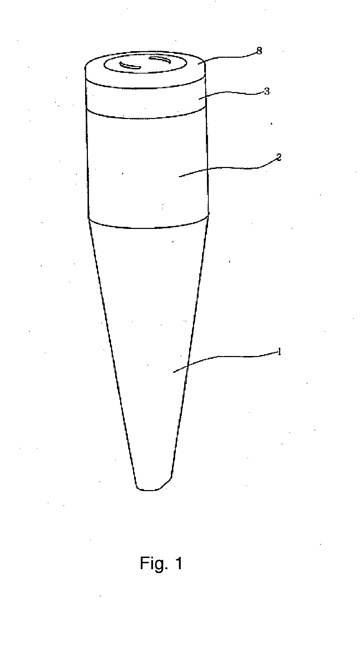

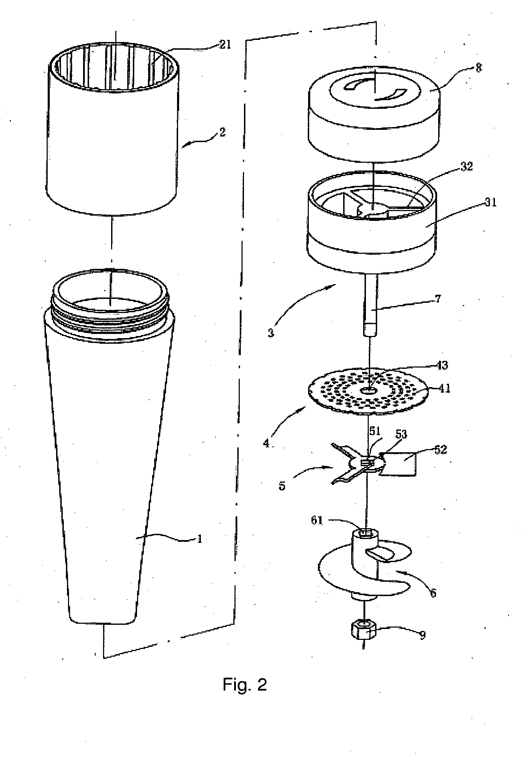

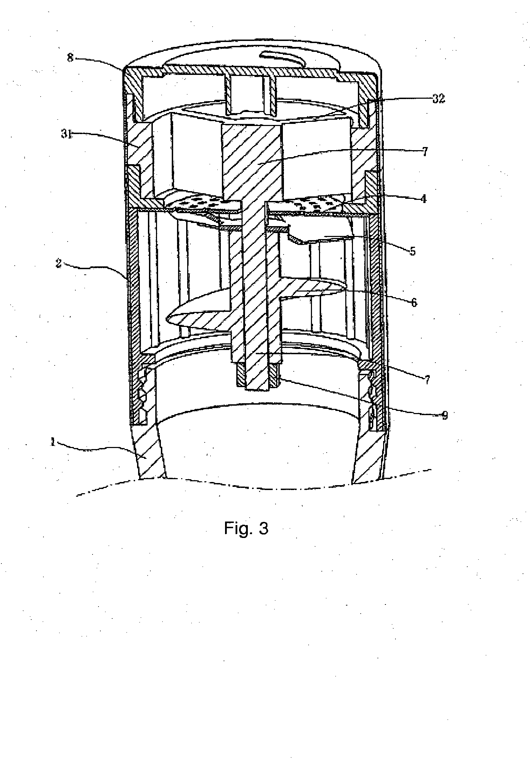

As shown in Fig. 1 to Fig. 3, the grinder comprises:
a container bottle 1 for containing a spice, and in threaded connection with the lower portion of a casing 2;
a casing 2, for forming a cavity for accommodating and installing a grinding component, and the inner peripheral wall of the casing is provided with a plurality of bumps 21 shaped as long strips at intervals. These bumps are set in parallel;
a hollow rotating base 3 provided above the casing 2 and comprising a rotating ring 31 connected with the casing 2 and a plurality of convex ribs 32 set at intervals on the rotating ring and protruding towards the centre of the rotating ring 31. These convex ribs 32 are arranged uniformly along the circumference of the rotating ring and the interval between adjacent convex ribs can be applied to discharging the ground spice. The rotating ring 31 and the casing are connected by matched steps so that the rotating ring 31 can rotate. An end cover 8 is provided above the hollow rotating base;
a fixed blade 4, structured as a round flat plate matched with the cavity of the casing and provided with a plurality of interconnected material holes 41. The inner peripheral walls of the material holes in the present embodiment are provided with sharp teeth protruding inwards. The middle portion of the fixed blade 4 is provided with a shaft hole 43;
a moveable blade 5 located below the fixed blade 4 and comprising a fixed base 51 and a plurality of blades 52 set on the periphery of the fixed base. There are three blades in the present embodiment. The blades 52 are arranged uniformly along the periphery of the fixed base. Each blade is set aslant relative to the plane where the fixed base locates. The middle portion of the fixed base 51 is provided with a shaft hole 53;
a screw rod 6, also called a packing auger located between the container bottle 1 and the moveable blade 5 and the middle portion of the screw rod is provided with a shaft hole 61;
a rotating shaft 7, one end of which is fixedly connected with each convex rib 32 and the other end extending downwards to pass through the shaft hole 43 on the fixed blade and the shaft hole 53 on the moveable blade and finally running out of the shaft hole 61 on the screw rod in turn, and the rotating shaft 7 and the screw rod 6 are fixedly connected by a nut 9. The rotating shaft 7 is in clearance fit with the shaft hole on the fixed blade. In other words, the fixed blade 4 cannot rotate with the rotation of the rotating shaft, while the shaft hole on the moveable blade is in close fit with the rotating shaft and the moveable blade rotates with the rotation of the rotating shaft 7.

Taking chilli grinding for example, the grinder is toppled and the dry chilli with original structure in the container bottle 1 falls into the inner cavity of the casing. Without any action, the dry chilli which is relatively large in volume with smooth outer wall is basically blocked on the junction of the container bottle 1 and the casing, and fails to get close to the moveable blade 5 and the fixed blade 4.

The rotating ring 31 is rotated so that the convex ribs 32 drive the rotating shaft 7 to rotate so as to drive the moveable blade 5 and the screw rod 6 to rotate. The blocked dry chilli is conveyed to the moveable blade 5 by the rotation of the screw rod 6 and crushed preliminarily with the stirring and cutting of the moveable blade 5. The preliminarily crushed chilli blocks enter the position between the moveable blade 5 and the fixed blade 4 and are further ground under the friction between the moveable blade 5 and the fixed blade 4. At the same time, the crushed chilli pieces in the material holes 41 on the fixed blade 4 are ground into sizes which are smaller than those of the materials holes 41 under the combined action of the fixed blade 5 and the sharp teeth in the material holes, and then leak out of the material holes 41 to be discharged from the intervals between the convex ribs 32.

## Claims

1. A grinder, comprising a container bottle (1) for containing a spice, a grinding component interconnected with the container bottle (1) and used for grinding the spice and a casing (2) for accommodating the grinding component, wherein a feeding mechanism for pushing the spice in the container bottle (1) into the grinding component is further provided between the container bottle (1) and the grinding component in the casing (2), wherein the feeding mechanism is a screw rod (6) provided between the container bottle (1) and the grinding component and driven by an external force to rotate,
**characterized in that**,
wherein a plurality of bumps (21) protruding towards the screw rod (6) are provided on the inner peripheral walls of the casing (2) opposite to the screw rod (6) to increase the friction between the spice and the inner wall of the casing when the screw rod feeds the spice so that feeding is more smooth, wherein the bumps (21) are shaped as strips and these bumps (21) are arranged in parallel along the axial line of the screw rod (6).

2. The grinder according to claim 1, wherein the grinding component comprising a fixed blade (4) set in the casing (2), and a moveable blade (5) matched with the fixed blade (4) to cut and grind the spice and driven by an external force to rotate.

3. The grinder according to claim 2, wherein moveable blade (5) comprising a fixed base (51) driven by an external force to rotate and a plurality of blades (52) connected on the periphery of the fixed base (51); the blades (52) are arranged uniformly along the periphery of the fixed base (51).

4. The grinder according to claim 3, wherein the upper portion of the casing is provided with a hollow rotating base (3) connected with the casing (2) and capable of rotating relative to the casing (2); the hollow rotating base (3) is provided with a rotating shaft (7) interlocked with the hollow rotating base (3); the rotating shaft (7) drives and is connected with the fixed base (51) and the screw rod (6).

5. The grinder according to claim 3, wherein each blade (52) is set aslant relative to the plane where the fixed base (51) is located.

6. The grinder according to claim 4, wherein the fixed blade (4) comprising a flat plate located opposite to the casing (2) and a plurality of interconnected material holes (41) provided on the flat plate.

7. The grinder according to claim 6, wherein the material holes (41) are provided with sharp teeth protruding inwards.

## Patentansprüche

1. Mühle, aufweisend eine Containerflasche (1), welche dazu dient, ein Gewürz zu enthalten, ein Zerkleinerungsteil, das mit der Containerflasche (1) verbunden ist und zum Zerkleinern des Gewürzes verwendet wird und ein Gehäuse (2) zur Aufnahme des Zerkleinerungsteils, wobei ein Vorschubmechanismus ferner zwischen der Containerflasche (1) und dem Zerkleinerungsteil im Gehäuse (2) zum Schieben des Gewürzes in der Containerflasche (1) in das Zerkleinerungsteil bereitgestellt wird, wobei der Vorschubmechanismus eine Schraubenspindel (6) ist, welche zwischen der Containerflasche (1) und dem Zerkleinerungsteil bereitgestellt und durch eine äußere Kraft zur Drehung angetrieben ist,
**dadurch gekennzeichnet, dass**
eine Vielzahl von Flächenerhebungen (21), welche in Richtung auf die Schraubenspindel (6) vorspringen, an den innere Umfangswänden des Gehäuses (2) gegenüber der Schraubenspindel (6) bereitgestellt sind, um die Reibung zwischen dem Gewürz und der Innenwand des Gehäuses zu steigern, wenn die Schraubenspindel das Gewürz zuführt, so dass die Zuführung weicher verläuft, wobei die Flächenerhebungen (21) in Streifenform ausgebildet und diese Flächenerhebungen (21) parallel entlang der axialen Linie der Schraubenspindel (6) angeordnet sind.

2. Mühle nach Anspruch 1, wobei das Zerkleinerungsteil eine fest stehende Klinge (4), welche im Gehäuse (2) eingestellt ist, und eine bewegliche Klinge (5) aufweist, welche mit der fest stehenden Klinge (4) zusammenarbeitet, um das Gewürz zu schneiden und zerkleinern, und durch eine äußere Kraft zur Drehung angetrieben wird.

3. Mühle nach Anspruch 2, wobei die bewegliche Klinge (5) eine fest stehende Basis (51) aufweist, welche durch eine äußere Kraft zur Drehung angetrieben wird und eine Vielzahl von Klingen (52), welche an der Peripherie der fest stehenden Basis (51) verbunden sind; die Klingen (52) einheitlich entlang der Peripherie der fest stehenden Basis (51) angeordnet sind.

4. Mühle nach Anspruch 3, wobei der obere Teil des Gehäuses eine hohle, rotierende Basis (3) aufweist, welche mit dem Gehäuse (2) verbunden und in der Lage sind, sich in Bezug auf das Gehäuse (2) zu drehen; die hohle, rotierende Basis (3) eine rotierende Welle (7) aufweist, welche mit der hohlen, rotierenden Basis (3) verblockt ist; die rotierende Welle (7) die fest stehende Basis (51) und die Schraubenspindel (6) antreibt und damit verbunden ist.

5. Mühle nach Anspruch 3, wobei jede Klinge (52) schräg in Bezug auf die Ebene eingestellt ist, wo sich die fest stehende Basis (51) befindet.

6. Mühle nach Anspruch 4, wobei die fest stehende Klinge (4) eine flache Platte, welche sich gegenüber dem Gehäuse (2) befindet, und eine Vielzahl von durchverbundenen Materiallöchern (41), die an der flachen Platte vorhanden sind, aufweist.

7. Mühle nach Anspruch 6, wobei die Materiallöcher (41) scharfe Zähne aufweisen, die nach innen vorspringen.

## Revendications

1. Moulin, comprenant un flacon (1) destiné à contenir une épice, un composant de broyage interconnecté avec le flacon (1) et utilisé pour le broyage de l'épice et un boîtier (2) pour le logement du composant de broyage, dans lequel un mécanisme d'alimentation destiné à pousser dans le composant de broyage l'épice se trouvant dans le flacon (1) est en outre fourni entre le flacon (1) et le composant de broyage dans le boîtier (2), dans lequel le mécanisme d'alimentation est une broche à vis (6) fournie entre le flacon (1) et le composant de broyage et entraînée en rotation par une force extérieure,
**caractérisé en ce que**
une pluralité de bosses (21) en saillie vers la broche à vis (6) sont fournies sur les parois périphériques intérieures du boîtier (2) en face de la broche à vis (6) afin d'accroître le frottement entre l'épice et la paroi intérieure du boîtier lorsque la broche à vis alimente l'épice, de manière à ce que l'alimentation se déroule plus aisément, dans lequel les bosses (21) ont la forme de bandes et ces bosses (21) sont disposé en parallèle le long de la ligne axiale de la broche à vis (6).

2. Moulin selon la revendication 1, dans lequel le composant de broyage comprend une lame stationnaire (4) installée dans le boîtier (2), et un lame mobile (5) coopérant avec la lame stationnaire (4) pour découper et broyer l'épice et entraînée en rotation par une force extérieure.

3. Moulin selon la revendication 2, dans lequel la lame mobile (5) comprend une base stationnaire (51) entraînée en rotation par une force extérieure et une pluralité de lames (52) raccordées sur la périphérie de la base stationnaire (51) ; les lames (52) sont disposées uniformément le long de la périphérie de la base stationnaire (51).

4. Moulin selon la revendication 3, dans lequel la partie supérieure du boîtier comporte une base rotative creuse (3) raccordée au boîtier (2) et capable de tourner par rapport au boîtier (2) ; la base rotative creuse (3) comporte un arbre rotatif (7) enchaîné avec la base rotative creuse (3) ; l'arbre rotatif (7) entraîne et est raccordé avec la base stationnaire (51) et la broche à vis (6).

5. Moulin selon la revendication 3, dans lequel chaque lame (52) est installée en biais par rapport au plan dans lequel se trouve la base stationnaire (51).

6. Moulin selon la revendication 4, dans lequel la lame stationnaire (4) comprend une plaque plate située en face du boîtier (2) et une pluralité de trous à matières (41) interconnectés présents sur la plaque plate.

7. Moulin selon la revendication 6, dans lequel les trous à matières (41) comportent des dents tranchantes en saillie vers l'intérieur.
